# EUROPÄISCHE PATENTSCHRIFT

(11) **EP 3 443 308 B1**
(45) Veröffentlichungstag und Bekanntmachung des Hinweises auf die Patenterteilung: **05.03.2025**
(21) Anmeldenummer: 17711606.8
(22) Anmeldetag: 14.03.2017
(51) Int. Cl.: G01J 3/52, G01J 3/02, A45D 44/00

(54) **FARBTAFELVORRICHTUNG UND VERFAHREN ZUR FARBERKENNUNG**
COLOR CHART DEVICE AND METHOD OF RECOGNITION OF COLORS
CARTE DE COULEURS ET PROCEDE D'IDENTIFICATION DE COULEUR

(30) Priorität: 15.04.2016 DE 102016206368
(43) Veröffentlichungstag der Anmeldung: 20.02.2019
(73) Patentinhaber: Henkel AG & Co. KGaA, 40589 Düsseldorf (DE)
(72) Erfinder: KOENEN, Annika, 41516 Grevenbroich (DE)
(86) Internationale Anmeldenummer: PCT/EP2017/055928
(87) Internationale Veröffentlichungsnummer: WO 2017/178177

(56) Entgegenhaltungen:
- WO-A1-2004/056135
- WO-A1-2011/089094
- KR-B1- 102 108 569
- ANONYMOUS: "Amazon.com: 6pc Felt Hair Clip Set | Rainbow, Bird, and Cupcake Handmade Clips for Baby and Girls: Clothing", 26 February 2016 (2016-02-26), XP055386253, Retrieved from the Internet <URL:https://www.amazon.com/Rainbow-Cupcake-Handmade-Clips-Girls/dp/B01C9TJP7S/ref=sr_1_11?ie=UTF8&qid=1498664037&sr=8-11&keywords=hair+clip+rainbow> [retrieved on 20170628]
- ANONYMOUS: "Amazon.com: LCLHB Toddler Small Rhinestone Flower Bow Partially Lined Alligator Clip 12 Pack: Clothing", 16 August 2015 (2015-08-16), XP055386256, Retrieved from the Internet <URL:https://www.amazon.com/LCLHB-Toddler-Rhinestone-Partially-Alligator/dp/B0140PS0CA/ref=sr_1_18?ie=UTF8&qid=1498664192&sr=8-18&keywords=hair+clip+rainbow> [retrieved on 20170628]

## Beschreibung

Die Erfindung betrifft eine Farbtafelvorrichtung und ein Verfahren zur Farberkennung.

Im Allgemeinen können Farbtafeln verwendet werden, um die Farbe eines zu erkennenden Gegenstands anschaulich möglichst zuverlässig und präzise in verschiedenen Lichtumgebungen zu bestimmen. So wird die Farbe eines Gegenstands, die in dunklem Umfeld als ein nicht allzu gesättigtes "Orange" wahrgenommen wird, in sehr hellem Umfeld als "Braun" wahrgenommen. In grünem Umfeld erscheint die Farbe als "Rotbraun", in rotem Umfeld als "Goldbraun". Die Farbtafel weist dazu eine Vielzahl von Farbfeldern auf, auf deren Grundlage sich Einflüsse der spezifischen Lichtumgebung korrigieren lassen.

Im Bereich der Haarfärbung werden herkömmlicherweise Farbtafeln eingesetzt, um die jeweilige Haarfarbe des zu färbenden Haares zu erkennen und auf Grundlage der erkannten Farbe ein geeignetes Haarfärbemittel zu finden. Soll die Farberkennung rechnergestützt erfolgen, ist es herkömmlicherweise nötig, ein digitales Bild der Haare zu erfassen, welches ausgewertet wird.

Die Haarfarbe lässt sich zuverlässiger und präziser erkennen, je besser das digitale Bild die vorliegende Situation abbildet. Beispielsweise können Schattenbildung und/oder Bewegungsunschärfe die Genauigkeit das Farberkennens beeinträchtigen. Das kann zum Resultat haben, dass das eingefärbte Haar nicht die gewünschte Farbe aufweist, was häufig nicht oder nur schwer zu korrigieren ist. Eine Korrektur kann zusätzliche und irreversible Beschädigungen der Haarstruktur hervorrufen. Beispielsweise kann ein zweiter Färbevorgang erforderlich werden, welcher das Haar zusätzlich belastet.

Gemäß verschiedenen Ausführungsformen wurde erkannt, dass die Aufnahme eines geeigneten Bildes insbesondere dann erschwert ist, wenn die Person, deren Haar gefärbt werden soll, das Bild selbst aufnimmt. Beispielsweise kann das Ausrichten der Kamera ohne geeignete Hilfsmittel unpräzise erfolgen, so dass das Bild nur einen Teil der Farbkarte abbildet. Alternativ oder zusätzlich kann eine Bewegungsunschärfe vergrößert sein, da die Person gleichzeitig die Farbtafel und die Kamera halten muss und/oder den Kopf intuitiv nach der Kamera ausrichtet.

Selbst, wenn die Kamera ein Display besitzt (z.B. im Fall eines Mobiltelefons mit Frontkamera), welches auf der Seite des Objektivs angeordnet ist, so dass die Person den aufzunehmenden Bildausschnitt auf dem Display erkennt, lassen sich damit eventuelle Schatten und/oder Bewegungsunschärfe nicht oder nur schwer erkennen und somit kaum reduzieren. Insbesondere macht es ein Display erforderlich, den Kopf nach der Kamera auszurichten. Ferner muss zum Verwenden des Displays eines Mobiltelefons häufig in Kauf genommen werden, dass die schlechtere Frontkamera verwendet wird, was die Bildqualität weiter verringert. Beispielsweise kann die Frontkamera eine geringere Auflösung und/oder eine geringere Lichtausbeute aufweisen als die Rückkamera.

Gemäß verschiedenen Ausführungsformen werden eine Farbtafelvorrichtung und ein Verfahren bereitgestellt, mittels dessen ein zuverlässiges und präzises Farberkennen erleichtert wird. Anschaulich wird die Tendenz zur Bewegungsunschärfe, ungenauer Positionierung der Farbtafel und/oder zur Schattenbildung reduziert. Dies erhöht anschaulich die Qualität der Bilddaten auf deren Grundlage das Farberkennen erfolgt. Damit kann auch mittels der Frontkamera eine ausreichende Bildqualität zur präzisen Farberkennung bereitgestellt sein oder werden.

Die dargestellten Aufgaben werden erfindungsgemäss gelöst durch eine Farbtafelvorrichtung mit den Merkmalen von Anspruch 1 sowie ein Verfahren zur Farberkennung mittels dieser Farbtafelvorrichtung enthaltend die Schritte von Anspruch 6.

Vorteilhafte Ausführungsformen werden in den abhängigen Ansprüchen definiert.

Gemäß verschiedenen Ausführungsformen ermöglichen die bereitgestellte Farbtafelvorrichtung und das bereitgestellte Verfahren, dass das Fotografieren der Haare bzw. die Nutzung der Kamera (z.B. einem Mobiltelefon mit einer entsprechenden Anwendung) mit beiden Händen erfolgen kann. Mit anderen Worten kann eine leichtere Handhabung der Farberkennung bereitgestellt sein oder werden. Damit lassen sich Zeit und Aufwand einsparen. Alternativ oder zusätzlich lässt sich das Messergebnis verfälschende Bewegungsunschärfe reduzieren, da die Kamera positionssicher gehalten werden kann.

Beispielsweise kann ein Justieren der Position und/oder Ausrichtung der Kamera erleichtert sein oder werden. Dies kann es ermöglichen, im Fall eines Mobiltelefons die Rückkamera zum Erfassen der Bilddaten zu verwenden, welche z.B. eine höhere Auflösung aufweisen kann als deren gegenüberliegende Frontkamera. Damit lassen sich die Bilddaten verbessern.

Alternativ oder zusätzlich kann eine Schattenbildung aufgrund der Farbtafel (z.B. aufgrund der Durchgangsöffnung) verringert werden. Dazu können die zu erkennenden Haare (z.B. ein Haarbüschel) mittels der Haarklammervorrichtung zumindest teilweise durch die Farbtafel hindurch

(z.B. durch eine Durchgangsöffnung der Farbtafel hindurch) und/oder gegen die Farbtafel gepresst werden. Mit anderen Worten lassen sich die Haare gegen die Farbtafel (z.B. ein Durchgangsöffnung darin) pressen, so dass eine durch die Farbtafel selbst hervorgerufene Schattenbildung verringert wird. Damit lassen sich das Messergebnis verfälschende Schatten reduzieren.

Eine Farbtafelvorrichtung (kann auch als Farberkennungshilfe bezeichnet werden) kann Folgendes aufweisen: eine Farbtafel, welche eine Vielzahl voneinander verschiedener Referenzfarben aufweist, wobei die Farbtafel einen transparenten oder transluzenten Erkennungsbereich aufweist, mittels dessen eine Farbe eines Haarbüschels erfassbar ist; und eine an der Farbtafel befestigte oder an die Farbtafel angeformte Haarklammervorrichtung, welche zum Klemmen eines in seiner Haarfarbe zu erfassenden Haarbüschels an dem Erkennungsbereich eingerichtet ist.

Die Farbtafel kann flächenförmig ausgebildet sein oder zumindest einen flächenförmigen Abschnitt aufweisen. Die Farbtafel (z.B. der zumindest eine flächenförmige Abschnitt) kann gekrümmt sein oder werden oder zumindest einen gekrümmten Abschnitt aufweisen. Alternativ oder zusätzlich kann die Farbtafel (z.B. der zumindest eine flächenförmige Abschnitt) planar sein oder zumindest einen planaren Abschnitt aufweisen.

Die Referenzfarben der Farbtafel können sich in ihrer Farbvalenz, ihrer spektralen Zusammensetzung und/oder Helligkeit (kann auch als Hellwert bezeichnet werden) voneinander unterscheiden.

Die Farbtafel kann eine Vielzahl von Referenzfarb-Feldern aufweisen, von denen jedes eine Referenzfarbe aufweist und/oder welche sich in ihrer Farbvalenz, ihrer spektralen Zusammensetzung und/oder Helligkeit unterscheiden.

Die Farbvalenz, die spektrale Zusammensetzung und/oder die Helligkeit können die Eigenschaften von reflektiertem Licht der Farbtafel beschreiben. Mehrere voneinander verschiedene Spektralverteilungen können derselben Farbvalenz zugeordnet sein. Werden Spektralverteilungen in Klassen eingeteilt, welche jeweils die als gleichfarbig wahrgenommenen Spektralverteilungen zusammenfassen, so beschreibt die Farbvalenz eine eindeutige Kennzeichnung dieser Klassen. Jede Farbvalenz kann einem Farbort in einem Farbraum (z.B. dem HSV-Farbraum oder dem L*a*b*-Farbraum) zugeordnet sein oder werden. Der HSV-Farbraum kann von dem Farbwert (kann auch als hue bezeichnet werden) der Farbsättigung (kann auch als saturation bezeichnet werden) und dem Hellwert (kann auch als *value* bezeichnet werden) aufgespannt werden. Der L*a*b*-Farbraum (auch als Lab-Farben, CIELAB oder CIEL*a*b* bezeichnet) beschreibt alle wahrnehmbaren Farben.

Der L*a*b*-Farbraums kann Geräteunabhängigkeit und die Wahrnehmungsbezogenheit bereitstellen, das heißt: Farben werden unabhängig von der Art ihrer Erzeugung oder Wiedergabetechnik so definiert, wie sie von einem Normalbeobachter bei einer Referenz-Lichtbedingung wahrgenommen werden. Der L*a*b*-Farbraum ist in der EN ISO 11664-4 genormt.

Der Erkennungsbereich kann eine Durchgangsöffnung aufweisen. Alternativ oder zusätzlich kann der Erkennungsbereich ein transparentes und/oder transluzentes Material (z.B. ein festes Material und/oder ein gasförmiges Material) aufweisen. Dann kann der Erkennungsbereich ein transparentes oder transluzentes Gas aufweisen (z.B. Atmosphäre), welches in der Durchgangsöffnung angeordnet ist. Alternativ oder zusätzlich kann der Erkennungsbereich einen transparenten oder transluzenten Feststoff aufweisen (z.B. eine Folie).

Die Haarklammervorrichtung kann in einer Geschlossen-Position gegen die Farbtafel, z.B. gegen einen Rand des Erkennungsbereichs, pressen.

Eine Kraft (kann auch als Anpresskraft bezeichnet werden), welche die Haarklammervorrichtung erzeugt, kann größer sein als eine Gewichtskraft der Farbtafelvorrichtung, so dass sich die Farbtafelvorrichtung an dem zu erkennenden Haarbüschel selbst (z.B. kraftschlüssig) trägt.

Die Haarklammervorrichtung kann Aufnehmen des Haarbüschels entgegen einer Rückstellkraft aus einer Geschlossen-Position in eine Offen-Position beweglich sein. Die Rückstellkraft kann in der Geschlossen-Position der Anpresskraft entsprechen.

Die Rückstellkraft kann in der Geschlossen-Position größer sein als eine Gewichtskraft der Farbtafelvorrichtung, so dass sich die Farbtafelvorrichtung an dem zu erkennenden Haarbüschel selbst trägt.

Die Haarklammervorrichtung kann ein federelastisches Material und/oder einen federelastischen Abschnitt aufweisen, welcher die Rückstellkraft bewirkt.

Gemäß verschiedenen Ausführungsformen kann die Haarklammervorrichtung eine Schenkelfeder aufweisen, welche die Rückstellkraft bewirkt. Die Schenkelfeder kann zumindest einen Schenkel der Haarklammervorrichtung mit der Farbtafel und/oder einem anderen Schenkel der Haarklammervorrichtung koppeln.

Eine Kraft, mit der die Haarklammervorrichtung klemmt (z.B. gegen die Farbtafel presst), kann größer sein als die Gewichtskraft der Farbtafelvorrichtung, so dass sich die Farbtafel mittels der Haarklammervorrichtung an dem zu erkennenden Haarbüschel getragen wird.

Die Farbtafel kann zumindest eine optische Lageerkennungsmarke (z.B. Referenzmarke und/oder Authentifikationsmarke) zum Lageerkennen der Farbtafel aufweisen.

Die Haarklammervorrichtung kann zwei Schenkel aufweisen, welche in einer Geschlossen-Position gegeneinander pressen.

Die Haarklammervorrichtung kann zumindest einen beweglich gelagerten Schenkel aufweisen, welcher zum Aufnehmen des Haarbüschels in die Offen-Position beweglich ist.

Das Haarbüschel (z.B. ein Haarbündel, eine Haarsträhne oder eine Haarlocke) kann mehrere Fasern (z.B. ein Bündel von mehreren Fasern) aufweisen oder daraus gebildet sein. Die Fasern (können auch als Fäden bezeichnet werden) können aneinander ausgerichtet (d.h. geordnet, z.B. regelmäßig und/oder gekämmt) oder ungeordnet (z.B. unregelmäßig) angeordnet sein. Die Fasern können ein organisches Material (z.B. Keratin, z.B. Horn) aufweisen oder daraus gebildet sein. Das Haarbüschel kann beispielsweise mehrere Keratinfasern (kann auch als Haare, Hornfäden oder Haarfasern bezeichnet werden, z.B. Naturhaar) aufweisen oder daraus gebildet sein. Alternativ oder zusätzlich können die Fasern einen Kunststoff aufweisen oder daraus gebildet sein (z.B. ein Polymer).

Das Farberkennen kann erfolgen während das Haarbüschel mit einer Person verbunden ist (anschaulich z.B. am Kopf).

Ein Verfahren zur Farberkennung kann Folgendes aufweisen: selbsttragendes (z.B. kraftschlüssiges und/oder formschlüssiges) Befestigen einer Farbtafelvorrichtung an einem zu erkennenden Haarbüschel; Durchführen einer optischen Farberkennung des Haarbüschels unter Verwendung der Farbtafelvorrichtung.

Ein Verfahren zur Farberkennung mittels einer Farbtafelvorrichtung, welche eine Farbtafel und eine an der Farbtafel befestigte oder an die Farbtafel angeformte Haarklammervorrichtung aufweist, kann Folgendes aufweisen: Klemmen (z.B. Festklemmen, d.h. kraftschlüssiges Halten) eines zu erkennenden Haarbüschels mittels der Haarklammervorrichtung; Durchführen einer optischen Farberkennung des Haarbüschels unter Verwendung der Farbtafelvorrichtung.

Das Klemmen kann das zu erfassende Haarbüschel gegen die Farbtafel (z.B. gegen einen Rand der Farbtafelvorrichtung) zu pressen.

Das Klemmen kann derart erfolgen, dass sich die Farbtafelvorrichtung an dem zu erkennenden Haarbüschel entgegen ihrer Gewichtskraft (z.B. in einer festen Lage) selbst trägt. Beispielsweise kann das Klemmen mit einer Klemmkraft (kann auch als Anpresskraft bezeichnet werden) erfolgen, welche derart eingerichtet ist, dass die Farbtafelvorrichtung kraftschlüssig an dem zu erkennenden Haarbüschel gehalten wird.

Das Durchführen der optischen Farberkennung kann aufweisen, Bilddaten der Farbtafel und des Haarbüschels zu erfassen, auf deren Grundlage die optische Farberkennung erfolgt.

Das Verfahren kann ferner Folgendes aufweisen:
Ermitteln eines Färbemittels (kann auch als Farbstoff oder Dye bezeichnet werden) auf Grundlage der Farberkennung, welches durch Aufbringen auf das Haarbüschel eine Farbänderung (des Haarbüschels) gemäß einer Vorgabe bewirkt.

Das Färbemittel kann eine Sekundärfarbe aufweisen, welche in einer subtraktiven Farbüberlagerung mit dem Haarbüschel eine vordefinierte Mischfarbe ergibt.

Das Durchführen der Farberkennung kann mittels eines Mobilgeräts erfolgen.

Das Verfahren kann aufweisen: Erfassen von Bilddaten, welche den Erkennungsbereich und/oder das zu erkennende Haarbüschel repräsentieren.

Das Durchführen der Farberkennung kann aufweisen, eine Farbe des Haarbüschels zu bestimmen, z.B. auf Grundlage der Bilddaten.

Das Durchführen der Farberkennung kann aufweisen, eine Farbe (kann auch als Farbvalenz bezeichnet werden) des Haarbüschels mit der Farbtafel zu vergleichen, z.B. mit einer oder mehrerer Referenzfarben der Farbtafel. Auf Grundlage des Vergleichens kann eine Korrekturinformation ermittelt werden, welche eine Farb-Verfälschung des Haarbüschels und/oder der Referenzfarben repräsentiert.

Das Durchführen der Farberkennung kann eine Lage (d.h. Position und/oder Ausrichtung) der Farbtafelvorrichtung auf Grundlage zumindest einer Lageerkennungsmarke der Farbtafelvorrichtung zu ermitteln.

Farbtafelvorrichtungen sind in den Figuren dargestellt und werden im Folgenden näher erläutert.

Es zeigen
- Figur 1A und Figur 1B: jeweils eine Farbtafelvorrichtung in verschiedenen schematischen Ansichten;
- Figur 2A und Figur 2B: jeweils eine Farbtafelvorrichtung in verschiedenen schematischen Ansichten;
- Figur 3A und Figur 3B: jeweils eine Farbtafelvorrichtung gemäß verschiedenen Ausführungsformen der Erfindung in verschiedenen schematischen Ansichten;
- Figur 4A und Figur 4B: jeweils eine Farbtafelvorrichtung gemäß verschiedenen Ausführungsformen der Erfindung in verschiedenen schematischen Ansichten;
- Figur 5A bis Figur 5C: jeweils eine Farbtafelvorrichtung in einer schematischen Querschnittsansicht;
- Figur 6: eine Farbtafelvorrichtung in einer schematischen Draufsicht;
- Figur 7: eine Farbtafelvorrichtung in einer schematischen Draufsicht;
- Figur 8: ein Verfahren gemäß verschiedenen Ausführungsformen in einem schematischen Ablaufdiagramm;
- Figur 9: ein Verfahren gemäß verschiedenen Ausführungsformen in einem schematischen Ablaufdiagramm;
- Figur 10: ein Verfahren gemäß verschiedenen Ausführungsformen in einem schematischen Ablaufdiagramm;
- Figur 11: ein Verfahren gemäß verschiedenen Ausführungsformen in einem schematischen Ablaufdiagramm;
- Figur 12: ein Verfahren gemäß verschiedenen Ausführungsformen in einem schematischen Ablaufdiagramm;
- Figur 13: ein Verfahren gemäß verschiedenen Ausführungsformen in einer schematischen Perspektivansicht; und
- Figur 14A bis Figur 15: jeweils ein Farbtafelvorrichtung in einer schematischen Perspektivansicht.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Lage der beschriebenen Figur(en) verwendet. Da Komponenten von Ausführungsformen in einer Anzahl verschiedener Lagen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

Gemäß verschiedenen Ausführungsformen kann die Nutzung einer der Farberfassungsanwendung (kann auch als Farberfassung-App bezeichnet werden) bereitgestellt sein oder werden, welche die Haarfarbe des Konsumenten (einer Person) erfassen soll. Die Farberfassungsanwendung kann eingerichtet sein, Bilddaten zu verarbeiten. Beispielsweise kann zum Erfassen der Bilddaten ein Foto (von den Haaren) gemacht werden.

Zum Erfassen der Bilddaten (anschaulich zum Fotografieren des eigenen Haares) muss eine herkömmliche Farbkarte mit einer Hand festgehalten werden und mit der anderen Hand muss das Foto gemacht werden. Dies kann es erschweren, den Haaransatz zu erfassen, da dies eine exakte Positionierung und/oder Ausrichtung der Farbkarte erfordern kann. Ferner kann die herkömmliche Farbkarte beim Erfassen der Bilddaten verrutschen, was die Bilddaten aufgrund von Bewegungsunschärfe verschlechtern kann und/oder zu unbrauchbaren Bilddaten führen kann, z.B. wenn diese die Farbkarte nicht vollständig abbilden. Das Erfassen der Bilddaten mittels einer herkömmlichen Farbkarte kann insbesondere dann erschwert sein oder werden, wenn auf der Seite der Kamera kein Display angeordnet ist, z.B. wenn eine Kamera kein Display und/oder das Mobiltelefon (z.B. ein Smartphone) keine Frontkamera aufweist. Ferner kann eine herkömmliche Farbkarte nur auf dem Haar aufliegen, was die Schattenbildung, z.B. aufgrund eines Lochs (kann auch als Durchgangsöffnung bezeichnet werden) der Farbkarte, erhöht. Diese Schatten können das Messergebnis verfälschen.

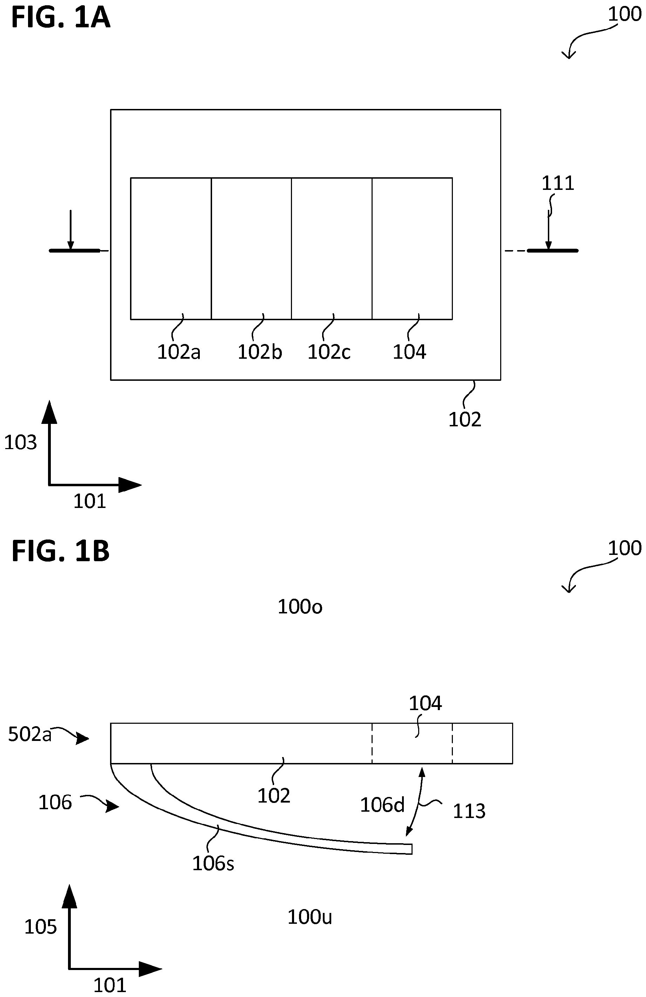

**Fig.1A** veranschaulicht eine Farbtafelvorrichtung 100 in einer schematischen Draufsicht (z.B. auf eine erste Seite 100o der Farbtafelvorrichtung 100) und **Fig.1B** die Farbtafelvorrichtung 100 in einer schematischen Querschnittsansicht (z.B. in dem Querschnitt 111)oder Seitenansicht (z.B. entlang Richtung 103).

Die Farbtafelvorrichtung 100 (kann auch als Farberkennungshilfe bezeichnet werden) kann eine Farbtafel 102 aufweisen. Die Farbtafel 102 kann eine Vielzahl voneinander verschiedener Referenzfarben 102a, 102b, 102c aufweisen (beispielsweise drei oder mehr als drei). Beispielsweise kann die Farbtafel 102 eine Vielzahl von Farbfeldern (können auch als Referenzfarb-Felder bezeichnet werden) aufweisen, welches sich in ihrer Farbe unterscheiden. Jedes Referenzfarb-Feld kann eine der Referenzfarben 102a, 102b, 102c aufweisen oder daraus gebildet sein.

Die Referenzfarben 102a, 102b, 102c können auf einer ersten Seite 100o der Farbtafelvorrichtung 100 (anschaulich eine Oberseite 100o) angeordnet sein. Beispielsweise kann die Farbtafel 102 einen flächenförmigen Träger 502a (auch als Flächenelement bezeichnet, z.B. eine Karte) aufweisen, auf dem die Referenzfarben 102a, 102b, 102c angeordnet sind. Der Träger 502a kann eben sein, z.B. plattenförmig, wie in Fig.1A und Fig.1B veranschaulicht ist. Alternativ oder zusätzlich kann der flächenförmige Träger 502a einen gekrümmten Abschnitt aufweisen oder daraus gebildet sein oder anders geformt sein.

Die Farbtafelvorrichtung 100 kann einen transparenten oder transluzenten Erkennungsbereich 104 aufweisen. Mittels des Erkennungsbereichs 104 kann eine Farbe eines Haarbüschels erfassbar sein. Der Erkennungsbereich 104 kann sich von der ersten Seite 100o der Farbtafelvorrichtung 100 zu einer zweiten Seite 100u der Farbtafelvorrichtung 100 (anschaulich eine Unterseite 100u) erstrecken, z.B. durch den flächenförmigen Träger 502a der Farbtafel 102 hindurch.

Ferner kann die Farbtafelvorrichtung 100 eine an der Farbtafel 102 befestigte Haarklammervorrichtung 106 aufweisen. Die Haarklammervorrichtung 106 kann auf der zweiten Seite 100u der Farbtafel 102 angeordnet sein. Die zweiten Seite 100u der Farbtafel 102 kann der ersten Seite 100o der Farbtafel 102 gegenüberliegen. Die Haarklammervorrichtung 106 kann zum Klemmen eines Haarbüschels eingerichtet ist, z.B. derart, dass dieses durch den Erkennungsbereich 104 hindurch sichtbar ist.

Der Erkennungsbereich 104 kann eine Durchgangsöffnung aufweisen. Alternativ oder zusätzlich kann der Erkennungsbereich 104 einen transparenten oder transluzenten Feststoff aufweisen, z.B. eine transparente oder transluzente Folie.

Die Haarklammervorrichtung 106 kann zum Öffnen 113 entgegen einer Rückstellkraft aus einer Geschlossen-Position in eine Offen-Position (in Fig.1B veranschaulicht) gebracht sein oder werden. In der Offen-Position kann ein Haarbüschel in die Farbtafelvorrichtung 100 (z.B. zwischen die Haarklammervorrichtung 106 und die Farbtafel 102) eingelegt werden.

Beispielsweise kann die Haarklammervorrichtung 106 zumindest einen Schenkel 106s aufweisen, welche zum Öffnen 113 dieser entgegen der Rückstellkraft von der Farbtafel 102 (z.B. deren Erkennungsbereich 104) weg bewegt werden kann. Damit kann zwischen dem Schenkel 106s der Haarklammervorrichtung 106 und der Farbtafel 102 (z.B. deren Erkennungsbereich 104) ein Spalt 106d gebildet sein oder werden, in welchen das Haarbüschel (z.B. mit einer Person gekoppelt) eingelegt werden kann. Anschaulich kann das Haarbüschel beispielsweise die Haarklammervorrichtung 106 mit der Person koppeln.

Der Schenkel 106s der Haarklammervorrichtung 106 kann an der Farbtafel 102 befestigt sein. Beispielsweise kann der Schenkel 106s der Haarklammervorrichtung 106 federelastisch eingerichtet sein und/oder federelastisch an der Farbtafel 102 befestigt sein. Beispielsweise kann der Schenkel 106s der Haarklammervorrichtung 106 oder ein Abschnitt dieser ein federelastisches Material aufweisen oder daraus gebildet sein, z.B. einen federelastischen Kunststoff (z.B. ein Elastomer). Damit kann die Rückstellkraft von dem Schenkel 106s der Haarklammervorrichtung 106 erzeugt werden. Eine Federkonstante des Schenkels 106s (wenn vorhanden) kann kleiner sein als eine Federkonstante der Farbtafel 102.

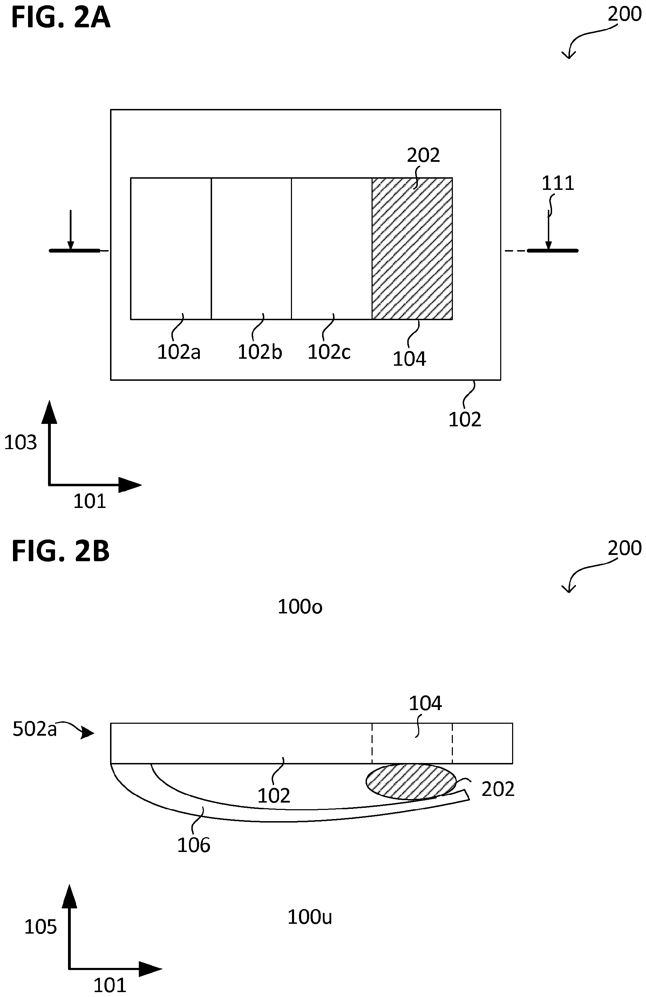

**Fig.2A** veranschaulicht eine Farbtafelvorrichtung 200 in einer schematischen Draufsicht und **Fig.2B** die Farbtafelvorrichtung 200 in einer schematischen Querschnittsansicht (z.B. in dem Querschnitt 111) oder Seitenansicht (z.B. entlang Richtung 103), z.B. die Farbtafelvorrichtung 100 in einer Klemm-Position.

Die Haarklammervorrichtung 106 kann zum Schließen 113 mittels der Rückstellkraft in eine Klemm-Position (in Fig.2B veranschaulicht) gebracht werden. Die Klemm-Position kann anschaulich zwischen der Geschlossen-Position und der Offen-Position sein.

Die Haarklammervorrichtung kann in der Geschlossen-Position gegen die Farbtafel 102 (z.B. den Erkennungsbereich 104) pressen (wenn z.B. kein Haarbüschel 202 eingelegt ist). Ist ein Haarbüschel 202 in die Farbtafelvorrichtung 200 eingelegt, kann die Haarklammervorrichtung 106 in der Klemm-Position das Haarbüschel 202 gegen die Farbtafel 102 (z.B. den Erkennungsbereich 104) pressen. Damit kann ein Abstand des Haarbüschels 202 von dem Erkennungsbereichs 104 reduziert werden, was die Schattenbildung reduziert. Anschaulich kann das gegen die Farbtafel 102 gepresste Haarbüschel an der Farbtafel 102 anliegen.

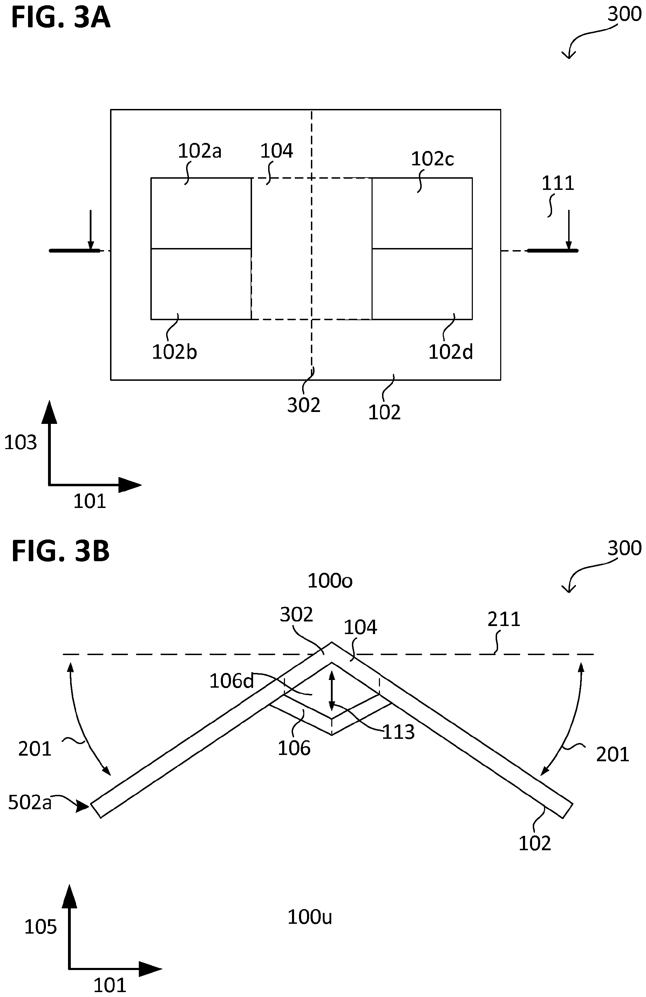

**Fig.3A** veranschaulicht eine Farbtafelvorrichtung 300 gemäß verschiedenen erfindungsgemäßen Ausführungsformen in einer schematischen Draufsicht und **Fig.3B** die Farbtafelvorrichtung 300 in einer schematischen Querschnittsansicht (z.B. in dem Querschnitt 111) oder Seitenansicht (z.B. entlang Richtung 103).

Die Farbtafelvorrichtung 300 kann ähnlich zu der hierin beschriebenen Farbtafelvorrichtung 100, 600, 200, 400, 500, 500a, 500b, 500c, 700, 1304, 1400 sein.

Die Farbtafelvorrichtung 300 kann eine Vielzahl voneinander verschiedener Referenzfarben 102a, 102b, 102c, 102d aufweisen (beispielsweise vier oder mehr als vier).

Die Farbtafelvorrichtung 300 kann eine an die Farbtafel 102 angeformte Haarklammervorrichtung 106 aufweisen. Beispielsweise kann die Haarklammervorrichtung 106 Teil des flächenförmigen Trägers 502a der Farbtafel 102 sein.

Die Farbtafel 102 kann beispielsweise einen Faltbereich 302 aufweisen, in dem die Farbtafel 102 faltbar eingerichtet ist. Beispielsweise kann die Haarklammervorrichtung 106 derart eingerichtet sein, dass diese mittels Faltens 201 der Farbtafel 102 in die Geöffnet-Position (in Fig.3B veranschaulicht) gebracht werden kann. In der Geöffnet-Position kann ein Spalt 106d in der Farbtafelvorrichtung 300 gebildet sein. Der Spalt 106d kann zum Aufnehmen eines Haarbüschels eingerichtet sein. Anschaulich kann die Haarklammervorrichtung 106 in der Geöffnet-Position eine Lasche aufweisen oder daraus gebildet sein. Beispielsweise kann die Lasche aus der Farbtafel 102 (z.B. der Karte) geformt sein.

In der Geschlossen-Position kann die Haarklammervorrichtung 106 beispielsweise in einer Ebene 211 mit dem Faltbereich 302 liegen, z.B. in dem Erkennungsbereich 104. Mittels Faltens 201 der Farbtafel 102 kann die Haarklammervorrichtung 106 aus der Ebene 211 bzw. dem Erkennungsbereich 104 herausbewegt werden, so dass sich eine Durchgangsöffnung in dem Erkennungsbereich 104 bildet.

Optional kann die Haarklammervorrichtung 106 eine Feder (z.B. eine Schenkelfeder) aufweisen oder daraus gebildet sein, welche beim Auslenken der Farbtafelvorrichtung 300 aus der Geschlossen-Position die Rückstellkraft erzeugt. Alternativ oder zusätzlich kann eine Feder an dem Faltbereich 302 angeordnet sein, z.B. in physischen Kontakt mit dem Faltbereich 302. Alternativ oder zusätzlich können die Haarklammervorrichtung 106 und/oder die Farbtafel 102 (z.B. in ihrem Faltbereich 302) ein federelastisches Material aufweisen oder daraus gebildet sein, z.B. ein federelastisches Polymer.

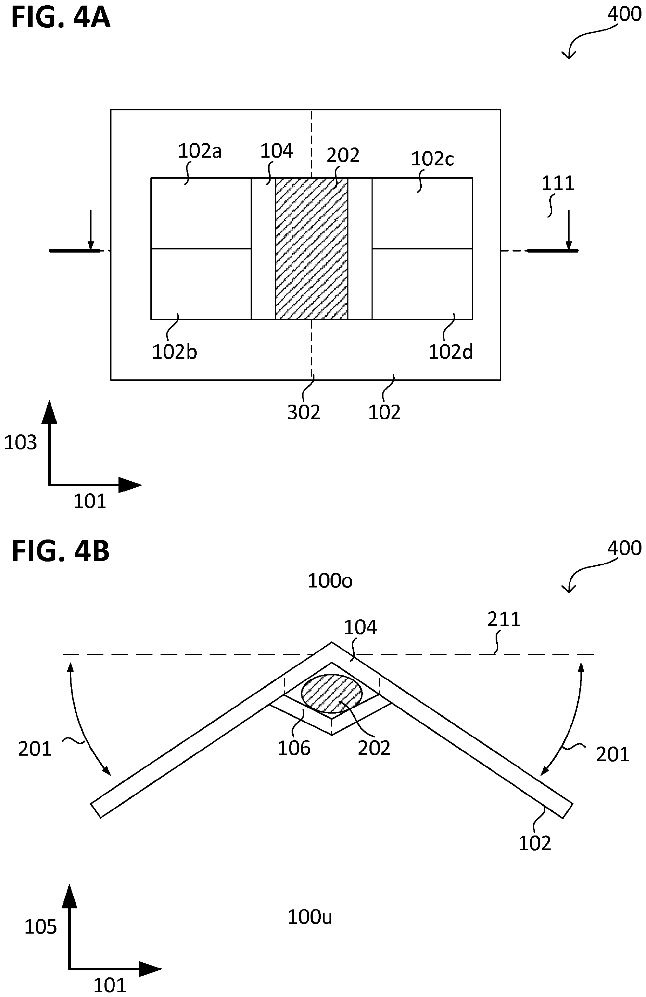

**Fig.4A** veranschaulicht eine Farbtafelvorrichtung 400 gemäß verschiedenen erfindungsgemäßen Ausführungsformen in einer schematischen Draufsicht und **Fig.4B** die Farbtafelvorrichtung 400 in einer schematischen Querschnittsansicht (z.B. in dem Querschnitt 111) oder Seitenansicht (z.B. entlang Richtung 103), z.B. die Farbtafelvorrichtung 300 mit eingelegten Haarbüschel 202.

Ist ein Haarbüschel 202 in die Farbtafelvorrichtung 400 eingelegt, kann die Haarklammervorrichtung 106 in der Klemm-Position das Haarbüschel 202 gegen die Farbtafel 102 (z.B. den Erkennungsbereich 104) pressen. Damit kann ein Abstand des Haarbüschels 202 von dem Erkennungsbereichs 104 reduziert werden, was die Schattenbildung reduziert.

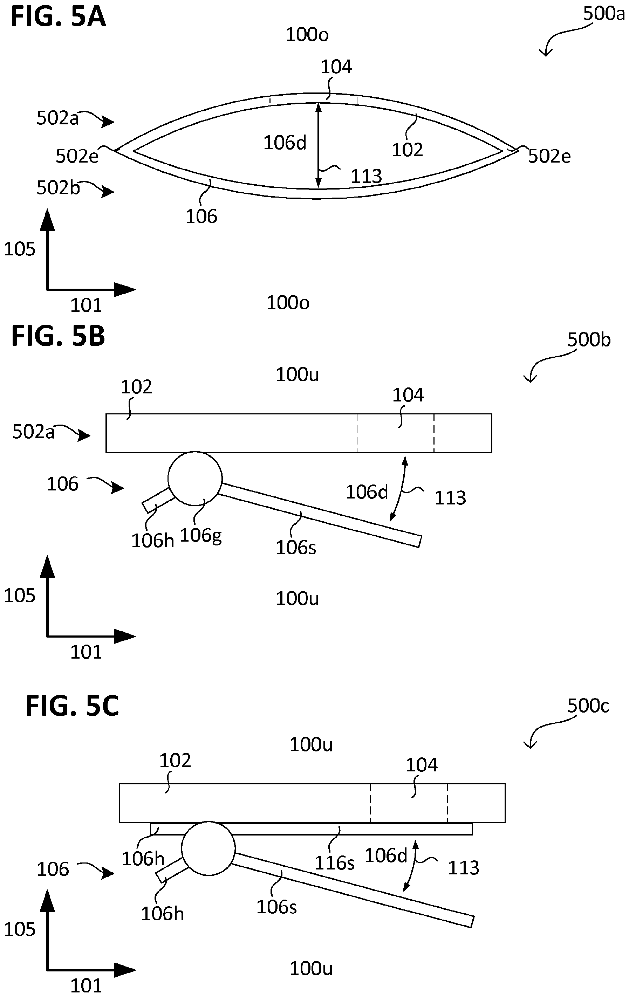

**Fig.5A** bis **Fig.5C** veranschaulichen jeweils eine Farbtafelvorrichtung 500(a bis c) in einer schematischen Querschnittsansicht (z.B. in dem Querschnitt 111) oder Seitenansicht (z.B. entlang Richtung 103).

Die Farbtafel 102 der Farbtafelvorrichtung 500a kann einen ersten (z.B. flächenförmigen) Träger 502a aufweisen und die Haarklammervorrichtung 106 der Farbtafelvorrichtung 500a kann einen zweiten (z.B. flächenförmigen) Träger 502b aufweisen, welche an ihren Endabschnitten 502e miteinander verbunden sind, z.B. monolithisch. Zum Öffnen 113 der Farbtafelvorrichtung 500a können der erste Träger 502a und der zweite Träger 502b gekrümmt werden, z.B. indem die Endabschnitte 502e aufeinander zu bewegt werden. In den zwischen dem ersten Träger 502a und den zweiten Träger 502b gebildeten Spalt 106d kann ein Haarbüschel aufgenommen werden. Beispielsweise können der erste Träger 502a und der zweite Träger 502b aus demselben federelastischen Material bestehen, z.B. einem federelastischen Polymer (z.B. einem Elastomer) und/oder in Form einer Folie.

Die Farbtafel 102 der Farbtafelvorrichtung 500b kann einen Träger 502a aufweisen. Die Haarklammervorrichtung 106 der Farbtafelvorrichtung 500b kann ein Gelenk 106g und einen Schenkel 106s aufweisen, welcher mittels des Gelenks 106g mit der Farbtafel 102 gekoppelt (z.B. verbunden) ist. Zum Öffnen 113 der Farbtafelvorrichtung 500a kann der Schenkel 106s relativ zu der Farbtafel 102 geschwenkt werden. Mit anderen Worten kann das Gelenk 106g den Schenkel 106s schwenkbar lagern. In den zwischen der Farbtafel 102 und dem Schenkel 106s gebildeten Spalt 106d kann ein Haarbüschel eingelegt werden. Der Schenkel 106s kann einen über das Gelenk 106g überstehenden Hebel 106h (kann auch als Griff 106h bezeichnet werden) aufweisen, welcher ein Öffnen 113 der Farbtafelvorrichtung 500b (d.h. ein Überwinden der Rückstellkraft) erleichtern kann. Die Haarklammervorrichtung 106 der Farbtafelvorrichtung 500c kann einen ersten Schenkel 106s und einen zweiten Schenkel 116s aufweisen, welche mittels des Gelenks 106g miteinander verbunden sind. Der zweite Schenkel 116s kann an der Farbtafel 102 der Farbtafelvorrichtung 500b befestigt (z.B. geklebt und/oder genietet) sein. **Zum Kleben der Haarklammervorrichtung 106 an die Farbtafel 102 kann neben einem aushärtenden Klebestoff (d.h. ein Klebestoff mit Verfestigungsmechanismus) alternativ oder zusätzlich ein Haftklebstoff (d.h. ein Klebestoff ohne Verfestigungsmechanismus) verwendet werden. Ein Haftklebstoff kann beispielsweise nach dem Auftragen auf ein Trägermaterial, wie beispielsweise die Farbtafelvorrichtung 500c und/oder den ersten Schenkel 106s, hochviskos und dauerklebrig bleiben und mit dem Zusammenfügen dieser aneinander eine dauerhafte Verbindung bilden.**

Zum Öffnen 113 der Farbtafelvorrichtung 500a kann der erste Schenkel 106s relativ zu dem zweiten Schenkel 116s geschwenkt werden. Mit anderen Worten kann das Gelenk 106g den ersten Schenkel 106s schwenkbar zu dem zweiten Schenkel 116s lagern. In den zwischen dem Träger 502a und dem Schenkel 106s gebildeten Spalt 106d kann ein Haarbüschel aufgenommen werden. Der erste Schenkel 106s und der zweite Schenkel 116s können jeder einen über das Gelenk 106g überstehenden Hebel 106h (kann auch als Griff 106h bezeichnet werden) aufweisen, welcher ein Öffnen der Farbtafelvorrichtung 500b erleichtern kann. Der zweite Schenkel 116s kann die Farbtafel 102 stabilisieren. Damit kann eine größere Rückstellkraft bereitgestellt werden, ohne die Farbtafel 102 zu verbiegen. Alternativ oder zusätzlich kann eine dünnere Farbtafel 102 verwendet werden.

Das Gelenk 106g der Farbtafelvorrichtung 500b und/oder der Farbtafelvorrichtung 500c kann eine Feder (z.B. eine Schenkelfeder) aufweisen. Die Feder kann eingerichtet sein, die Rückstellkraft zu erzeugen. Die Feder kann ein federelastisches Material aufweisen oder daraus gebildet sein, z.B. federelastisches Metall (z.B. Federstahl) und/oder einen federelastischen Kunststoff. Eine Federkonstante der Feder kann kleiner sein als eine Federkonstante eines Schenkels 106s, 116s (wenn vorhanden) der Haarklammervorrichtung 106 und/oder eine Federkonstante der Farbtafel 102 (wenn vorhanden).

Gemäß verschiedenen Ausführungsformen kann die Haarklammervorrichtung 106 eine Schenkelfeder aufweisen, welche die Rückstellkraft erzeugt. Die Schenkelfeder kann zumindest einen Schenkel 106s der Haarklammervorrichtung 106 mit der Farbtafel 102 und/oder einem anderen Schenkel 116s der Haarklammervorrichtung 116 (z.B. federelastisch) koppeln.

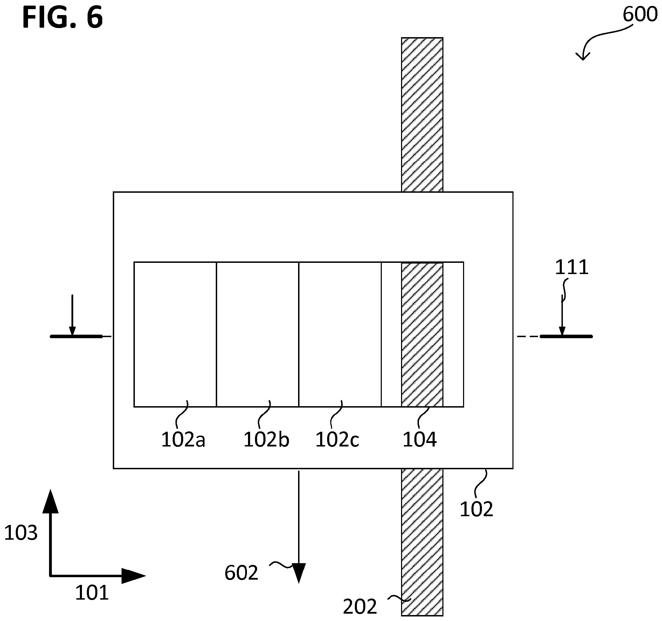

**Fig.6** veranschaulicht eine Farbtafelvorrichtung 600 in einer schematischen Draufsicht (z.B. auf eine erste Seite 100o der Farbtafelvorrichtung 600).

Eine Kraft (kann auch als Anpresskraft bezeichnet werden), welche die Haarklammervorrichtung 106 erzeugt und/oder mit welcher die Haarklammervorrichtung 106 gegen ein Haarbüschel 202 presst, kann größer sein als eine Gewichtskraft 602 der Farbtafelvorrichtung 600. Damit kann erreicht werden, dass sich die Farbtafelvorrichtung 600 an dem eingeklemmten Haarbüschel 202 selbst trägt. Alternativ oder zusätzlich kann die Haarklammervorrichtung 106 einen Zahn oder mehrere Zähne (z.B. ein gezahntes Profil) aufweisen, welche in das eingeklemmte Haarbüschel 202 eindringen (so dass sich diese an dem Haarbüschel 202 anschaulich verhaken). Dies kann eine Klemmwirkung und/oder einen Halt der Farbtafelvorrichtung 600 an dem Haarbüschel 202 verbessern.

Die Haarklammervorrichtung 106 kann vorgespannt sein, so dass die Rückstellkraft der Haarklammervorrichtung 106 in der Geschlossen-Position größer ist als null. Beispielsweise kann die Rückstellkraft der Haarklammervorrichtung 106 in der Geschlossen-Position größer sein als die Gewichtskraft 602 der Farbtafelvorrichtung 600. Die Rückstellkraft der Haarklammervorrichtung 106 in der Klemm-Position kann größer sein als die Rückstellkraft der Haarklammervorrichtung 106 in der Geschlossen-Position.

Die Farbtafelvorrichtung 600 kann mittels der Haarklammervorrichtung 106 an dem Haarbüschel 202 befestigt sein oder werden, z.B. selbsttragend.

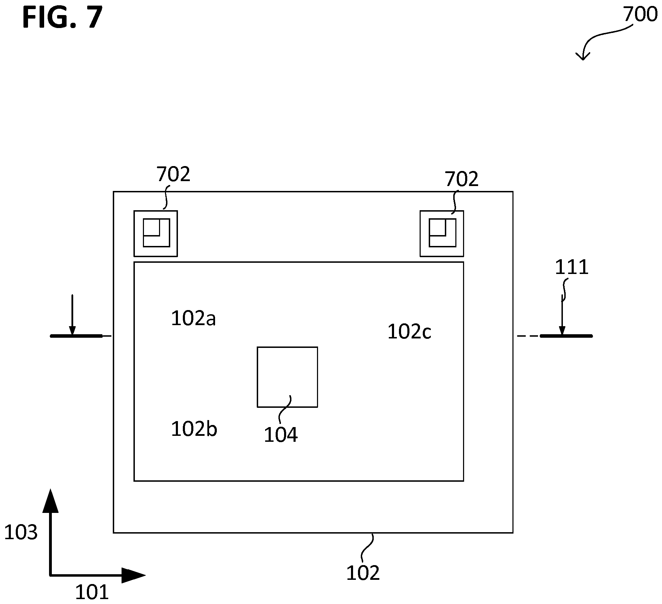

Fig.7 veranschaulicht eine Farbtafelvorrichtung 700 in einer schematischen Draufsicht (z.B. auf eine erste Seite 100o der Farbtafelvorrichtung 700).

Die Farbtafel 102 kann zumindest eine optische Lageerkennungsmarke 702 (z.B. eine, zwei, drei, vier oder mehr als vier Lageerkennungsmarken 702) aufweisen. Ein zum Farberkennen verwendetes Farberkennung-Gerät (z.B. rechnergestützt) kann zum Erkennen der zumindest einen Lageerkennungsmarke 702 eingerichtet sein.

Jede Lageerkennungsmarke 702 kann ein spezielles Muster aufweisen, welches nur innerhalb der zumindest einen Lageerkennungsmarke 702 vorkommt. Damit kann ein eindeutiges Erkennen und/oder Identifizieren jeder Lageerkennungsmarke 702 ermöglicht werden.

Die Lageerkennungsmarken 702 können eine Symmetrie aufweisen (d.h. durch eine Symmetrieoperation ineinander überführt werden). Beispielsweise können die Lageerkennungsmarken 702 an den Eckpunkten spiegelsymmetrischen Polygons (z.B. eines Rechtecks), eines Sehnenpolygons, eines gleichseitigen Polygons oder eines regelmäßigen Polygons angeordnet sein.

Zumindest einige (d.h. ein Teil oder alle) Referenzfarben 102a, 102b, 102c können zwischen den Lageerkennungsmarken 702 und/oder innerhalb des Polygons angeordnet sein. Beispielsweise können mehrere Lageerkennungsmarken 702 die Referenzfarben 102a, 102b, 102c umgeben (kann auch als Feldbegrenzung bezeichnet werden).

Beispielsweise können sich zumindest zwei der Lageerkennungsmarken 702 voneinander unterscheiden. Damit kann eine Ausrichtung (Orientierung) der Farbtafel 102 erkannt werden. Alternativ oder zusätzlich kann zumindest eine Ecke des Polygons frei von einer Lageerkennungsmarke 702 sein. Damit kann eine Ausrichtung der Farbtafel 102 erkannt werden.

Zumindest eine Lageerkennungsmarke 702 der Farbtafelvorrichtung 700 kann eine Referenzmarke (kann auch als Bezugsmarke bezeichnet werden) aufweisen oder daraus gebildet sein. Die Referenzmarke kann für einen Inkrementalgeber des Farberkennung-Geräts den lokalen Nullpunkt der Lageerkennung darstellen. Sie entspricht in ihrer Funktion der Nullmarke eines Maßstabs oder dem 0°-Teilstrich auf einem optischen Teilkreis.

Alternativ oder zusätzlich kann zumindest eine Lageerkennungsmarke 702 der Farbtafelvorrichtung 700 eine Authentifikationsmarke aufweisen oder daraus gebildet sein. Die Authentifikationsmarke kann eine Identifikation der Farbtafelvorrichtung 700 (z.B. der Farbtafel 102) ermöglichen. Beispielsweise kann auf Grundlage der Authentifikationsmarke ein Typ der Farbtafelvorrichtung 700 erkannt werden. Alternativ oder zusätzlich kann die Authentifikationsmarke eine eindeutige und individuelle Zuordnung der Farbtafel 102 ermöglichen (z.B. eine Seriennummer).

Beispielsweise kann die Farbtafel 102 zur Feldbegrenzung genau drei (z.B. gleiche) Lageerkennungsmarken 702 auf den Ecken eines Rechtecks aufweisen (z.B. kann eine vierte Ecke des Rechtecks frei von einer Lageerkennungsmarke 702 sein oder eine Bezugsmarke aufweisen). Mittels der fehlenden Lageerkennungsmarke 702 oder Bezugsmarke in der vierten Ecke kann das Farberkennung-Gerät die Orientierung (d.h. Ausrichtung) der Farbtafel 102 erkennen. Mit zunehmender Anzahl der Referenzfarben 102a, 102b, 102c können weitere Lageerkennungsmarken 702 hinzugefügt werden, um die Ausrichtung der Farbtafel 102 besser erkennbar zu machen.

Die relative Lage zweier Lageerkennungsmarken 702 (können auch als Hauptpositionsmarken bezeichnet werden) zueinander, z.B. deren Abstand voneinander, kann in einer Korrelation zu der Anordnung der Referenzfarben 102a, 102b, 102c (z.B. der Referenzfarb-Felder) stehen. Damit kann ein Erkennen der Referenzfarben erleichtert sein oder werden.

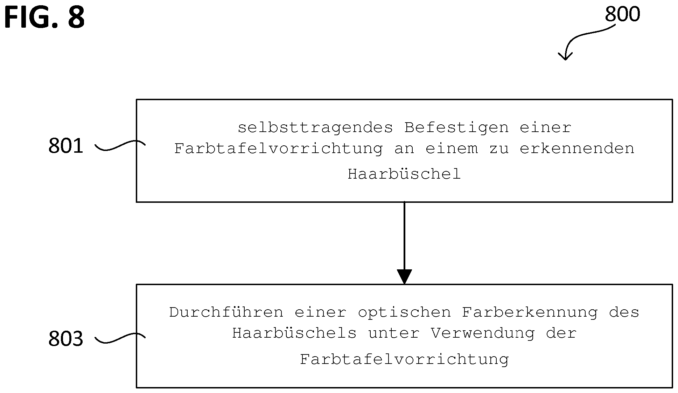

**Fig.8** veranschaulicht ein Verfahren 800 zur Farberkennung gemäß verschiedenen Ausführungsformen in einem schematischen Ablaufdiagramm.

Gemäß verschiedenen Ausführungsformen kann das Verfahren 800 in 801 aufweisen: selbsttragendes Befestigen einer Farbtafelvorrichtung an einem zu erkennenden Haarbüschel.

Alternativ oder zusätzlich kann das Verfahren 800 in 801 aufweisen: kraftschlüssiges Befestigen einer Farbtafelvorrichtung an einem zu erkennenden Haarbüschel.

Ferner kann das Verfahren 800 in 803 aufweisen: Durchführen einer optischen Farberkennung des Haarbüschels unter Verwendung der Farbtafelvorrichtung.

Die optische Farberkennung kann eingerichtet sein, wie vorangehend beschrieben ist.

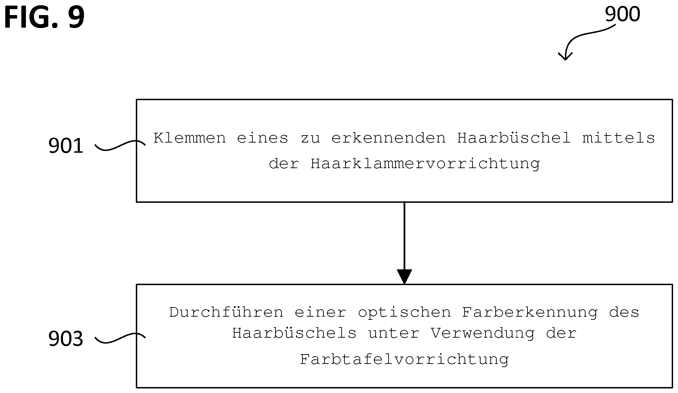

**Fig.9** veranschaulicht ein Verfahren 900 zur Farberkennung gemäß verschiedenen Ausführungsformen in einem schematischen Ablaufdiagramm.

Gemäß verschiedenen Ausführungsformen kann das Verfahren 900 mittels einer Farbtafelvorrichtung erfolgen. Die Farbtafelvorrichtung kann zumindest eine Farbtafel und eine an der Farbtafel befestigte oder an die Farbtafel angeformte Haarklammervorrichtung aufweisen.

Gemäß verschiedenen Ausführungsformen kann das Verfahren 900 in 901 aufweisen: Klemmen eines zu erkennenden Haarbüschels mittels der Haarklammervorrichtung.

Ferner kann das Verfahren 900 in 903 aufweisen: Durchführen einer optischen Farberkennung des Haarbüschels unter Verwendung der Farbtafelvorrichtung.

Die optische Farberkennung kann eingerichtet sein, wie vorangehend beschrieben ist.

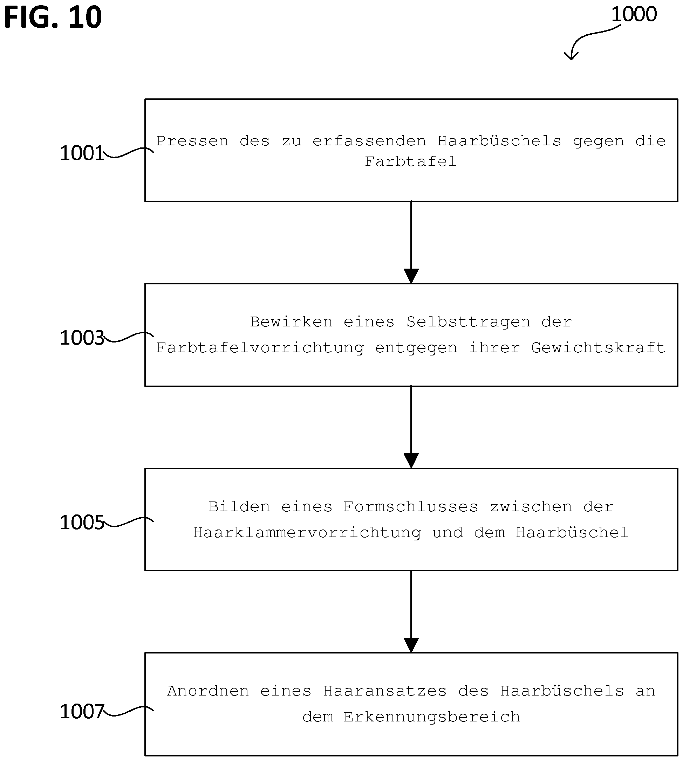

**Fig.10** veranschaulicht ein Verfahren 1000 zum Klemmen und/oder Befestigen gemäß verschiedenen Ausführungsformen in einem schematischen Ablaufdiagramm, z.B. das selbsttragende Befestigen 801 der Farbtafelvorrichtung an einem zu erkennenden Haarbüschel gemäß Verfahren 800 und/oder das Klemmen 901 eines zu erkennenden Haarbüschels mittels der Haarklammervorrichtung gemäß Verfahren 900.

Gemäß verschiedenen Ausführungsformen kann das Verfahren 1000 in 1001 aufweisen: Pressen des zu erfassenden Haarbüschels gegen die Farbtafel, z.B. gegen einen Rand der Farbtafel. Damit kann eine Schattenbildung verringert werden. Beispielsweise kann das Haarbüschel gegen den Erkennungsbereich und/oder zumindest teilweise in den Erkennungsbereich hinein gepresst werden. Wenn der Erkennungsbereich eine Durchgangsöffnung aufweist, kann das Haarbüschel zumindest teilweise in die Durchgangsöffnung hinein gepresst werden. Wenn der Erkennungsbereich ein transparentes oder transluzentes Flächenelement (z.B. eine Folie oder ein Gitter) aufweist, kann das Haarbüschel gegen das Flächenelement gepresst werden.

Optional kann das Verfahren 1000 in 1003 aufweisen: Bewirken eines Selbsttragens der Farbtafelvorrichtung entgegen ihrer Gewichtskraft.

Optional kann das Verfahren 1000 in 1005 aufweisen: Bilden eines Formschlusses zwischen der Haarklammervorrichtung und dem Haarbüschel (z.B. mittels Zähnen der Haarklammervorrichtung).

Optional kann das Verfahren 1000 in 1007 aufweisen: Anordnen eines Haaransatzes des Haarbüschels an dem Erkennungsbereich (d.h. zumindest teilweise an dem Rand des Erkennungsbereichs und/oder teilweise in dem Erkennungsbereich). Beispielsweise kann der Haaransatz durch den Erkennungsbereich hindurch sichtbar sein. Dann können die Bilddaten den Haaransatz repräsentieren. Beispielsweise kann die Farbtafelvorrichtung derart angeordnet werden, dass diese an dem Haaransatz angeordnet ist.

Anschaulich kann der Haaransatz ungefärbt sein. Somit kann ein Ermitteln der Naturhaarfarbe des Haars erleichtert sein oder werden. Beispielsweise kann der Bereich des Haarbüschels, welcher erfasst wird, einen Farbunterschied aufweisen.

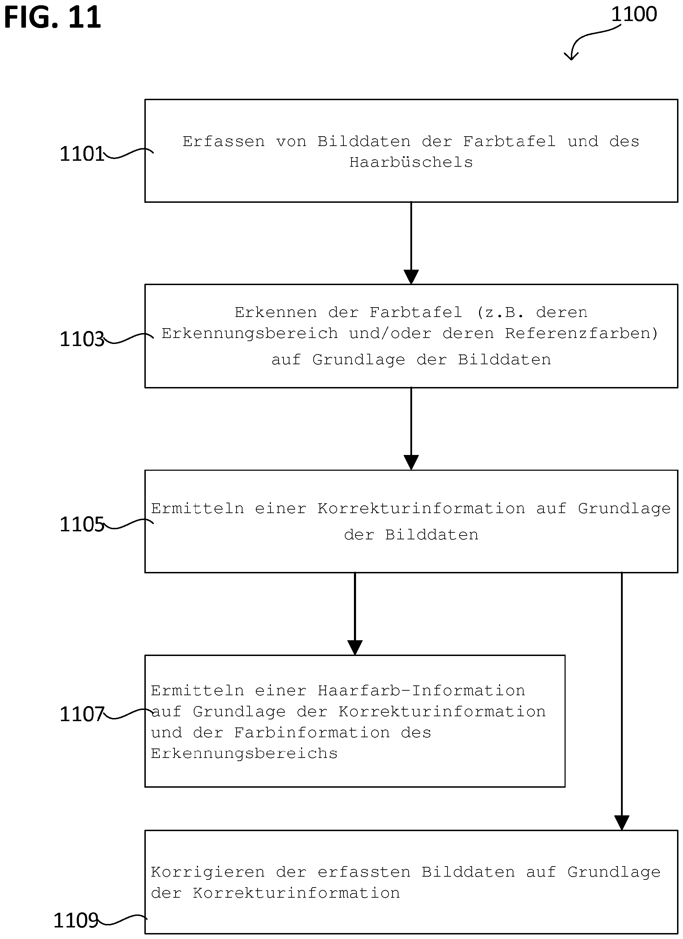

**Fig.11** veranschaulicht ein Verfahren 1100 zum Durchführen einer optischen Farberkennung in einem schematischen Ablaufdiagramm, z.B. gemäß Verfahren 800 und/oder gemäß Verfahren 900.

Gemäß verschiedenen Ausführungsformen kann das Verfahren 1100 in 1101 aufweisen: Erfassen von Bilddaten der Farbtafel und des Haarbüschels. Auf Grundlage der Bilddaten kann die optische Farberkennung erfolgen.

Gemäß verschiedenen Ausführungsformen kann das Erfassen von Bilddaten aufweisen: Erfassen von Licht, welches von der Farbtafelvorrichtung und dem Haarbüschel reflektiert wird (z.B. in einer Reflexionsmessung). Das Licht kann eine Wellenlänge im sichtbaren Bereich aufweisen, z.B. in einem Bereich von ungefähr 380 Nanometer (nm) bis ungefähr 780 Nanometer. Reflexion kann als diffuse Reflexion (Remission) und/oder gerichtete Reflexion verstanden werden. Als Remission kann die diffuse (ungerichtete) Reflexion von Licht verstanden werden im Gegensatz zur regulären gerichteten Reflexion (gemäß dem Reflexionsgesetz).

Ferner kann die optische Farberkennung aufweisen, auf Grundlage des reflektierten Lichts die Bilddaten bereitzustellen. Mit anderen Worten können die Bilddaten das reflektierte Licht repräsentieren.

Ferner kann das Verfahren 1100 in 1103 aufweisen: Erkennen der Farbtafel (z.B. deren Erkennungsbereich und/oder deren Referenzfarben) auf Grundlage der Bilddaten, z.B. unter Verwendung zumindest einer Lageerkennungsmarke der Farbtafel 102.

Ferner kann das Verfahren 1100 in 1103 aufweisen: Zuordnen einer Farbinformation zu jeder Referenzfarbe und/oder zu dem Erkennungsbereich (z.B. eine Spektralverteilung und/oder eine Farbvalenz) auf Grundlage der Bilddaten. Die Farbvalenz des Lichts kann eine Wirkung des Lichts auf die farbempfindlichen Sinneszellen des Auges beschreiben. Im Gegensatz zur Spektralverteilung, welche die vollständige Information über die im Licht vorhandenen Spektralfarben enthält, beschränkt sich die Farbvalenz auf eine durch drei Zahlenwerte darstellbare Information, die dafür maßgeblich ist, welche Farbempfindung das Licht im Auge auslöst.

Die Referenzfarbe kann eine Referenz-Farbinformation aufweisen oder repräsentieren. Anschaulich können die Farbinformationen aufgrund äußerer Einflüsse verfälscht sein und sich von der Referenz-Farbinformation unterscheiden.

Ferner kann das Verfahren 1100 in 1105 aufweisen: Ermitteln einer Korrekturinformation auf Grundlage der Bilddaten (der Referenzfarben). Die Korrekturinformation kann einen Unterschied der Farbinformationen von den Referenz-Farbinformationen repräsentieren. Die Korrekturinformation kann anschaulich die Verfälschung (z.B. aufgrund äußerer Einflüsse) beschreiben. Gemäß verschiedenen Ausführungsformen kann die optische Farberkennung aufweisen, auf Grundlage eines Vergleichs zwischen der Referenz-Farbinformation und der Farbinformationen die Korrekturinformation für jede der Referenzfarben zu ermitteln.

Ferner kann das Verfahren 1100 in 1107 aufweisen: Ermitteln einer Haarfarb-Information (kann auch als Haarfarbe bezeichnet werden, z.B. eine Spektralverteilung und/oder eine Farbvalenz des Haarbüschels) auf Grundlage der Korrekturinformation und der Farbinformation des Erkennungsbereichs. Anschaulich kann die ermittelte (z.B. verfälschte) Haarfarbe korrigiert werden.

Alternativ oder zusätzlich kann das Verfahren 1100 in 1109 aufweisen: Korrigieren der erfassten (z.B. verfälschten) Bilddaten auf Grundlage der Korrekturinformation. Dann kann die Haarfarb-Information auf Grundlage der Bilddaten ermittelt werden, welche korrigiert wurden (kann auch als korrigierte Bilddaten bezeichnet werden).

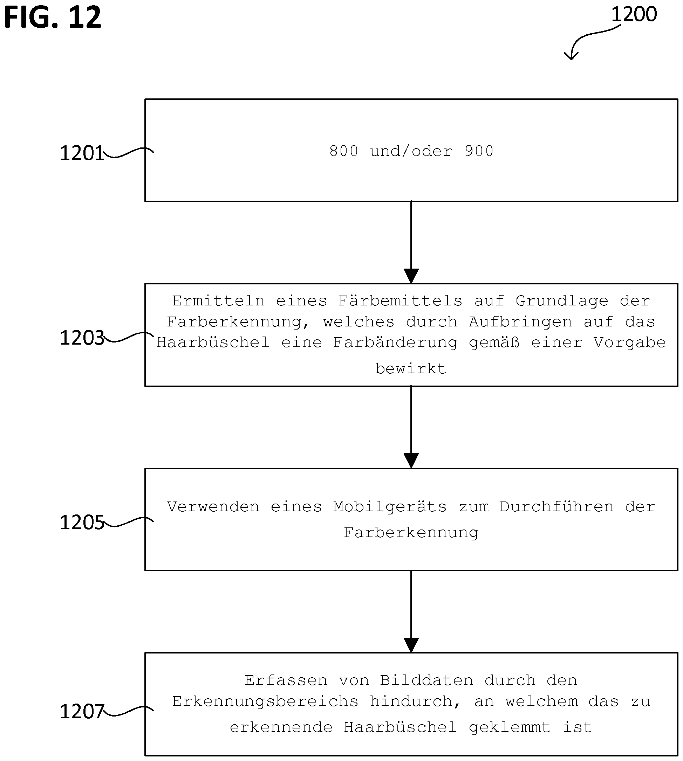

**Fig.12** veranschaulicht ein Verfahren 1200 zum Durchführen einer optischen Farberkennung in einem schematischen Ablaufdiagramm.

Gemäß verschiedenen Ausführungsformen kann das Verfahren 1200 in 1201 das Verfahren 800 und/oder das Verfahren 900 aufweisen.

Ferner kann das Verfahren 1200 in 1203 aufweisen: Ermitteln eines Färbemittels auf Grundlage der Farberkennung, welches durch Aufbringen auf das Haarbüschel eine Farbänderung gemäß einer Vorgabe bewirkt. Beispielsweise kann das Färbemittel aus einer Vielzahl von vordefinierten Färbemitteln ausgewählt werden.

Optional kann das Verfahren 1200 in 1205 aufweisen: Verwenden eines Mobilgeräts (kann auch als mobiles Farberkennung-Gerät bezeichnet werden) zum Durchführen der Farberkennung. Das Mobilgerät kann zumindest eine Bilderfassungsvorrichtung (z.B. eine Bilderfassungsvorrichtung und/oder zwei Bilderfassungsvorrichtungen), z.B. zumindest eine Kamera, aufweisen und eine Anzeigevorrichtung, z.B. ein elektronisches Display.

Ferner kann das Mobilgerät einen Prozessor aufweisen, welcher eingerichtet ist, die optische Farberkennung durchzuführen. Optional kann das Mobilgerät einen (z.B. nichtflüchtigen) Speicher aufweisen, welcher Code Segmente aufweist, welche die optische Farberkennung repräsentieren. Der Prozessor kann zum Verarbeiten der Code Segmente eingerichtet sein. Optional können die Code Segmente die Referenz-Farbinformationen repräsentieren. Optional können die Code Segmente die Vielzahl von Färbemitteln repräsentieren. Dann kann der Prozessor eingerichtet sein zum Ermitteln eines Färbemittels der Vielzahl von Färbemitteln, welches durch Aufbringen auf das Haarbüschel eine Farbänderung gemäß einer Vorgabe bewirkt.

Optional kann das Mobilgerät einen Kontroller (z.B. eine Steuerung, z.B. einen Mikrokontroller) aufweisen, welcher zum Bereitstellen einer Funkverbindung eingerichtet ist. Der Kontroller kann eingerichtet sein, einen physischen Zugriff auf Funkressourcen gemäß einer zellularen Langstreckenfunk-Kommunikationstechnologie (z.B. Mobilfunkverbindung) und/oder gemäß einer Kurzstreckenfunk-Kommunikationstechnologie (z.B. Bluetooth) bereitzustellen. Der Kontroller kann beispielsweise einen Transponder zum Senden und/oder Empfangen von Signalen (z.B. Daten) mittels der Kommunikationstechnologie und einen Transponder-Schaltkreis zum Steuern des Transponders aufweisen. Beispielsweise kann der Kontroller zum Bereitstellen einer Mobilfunkverbindung und/oder einer drahtlosen Kurzstreckenfunk-Datenübertragung eingerichtet sein.

Gemäß verschiedenen Ausführungsformen kann der Prozessor einen Anwendungsprozessor aufweisen oder daraus gebildet sein. Der Anwendungsprozessor kann eingerichtet sein, eine oder mehrere Anwendungen (können auch als Apps bezeichnet werden) zu unterstützen, z.B. in einer Mobilbetriebssystem-Umgebung.

Gemäß verschiedenen Ausführungsformen kann das Mobilgerät einen Handheld-Computer (z.B. ein Smartphone und/oder einen Tabletcomputer) oder einen Laptop aufweisen oder daraus gebildet sein. Das Mobilgerät kann einen Energiespeicher (z.B. einen Akkumulator und/oder eine Batterie) aufweisen.

Optional kann das Verfahren 1200 in 1207 aufweisen: Erfassen der Bilddaten durch den Erkennungsbereich hindurch, an welchem das zu erkennende Haarbüschel geklemmt ist.

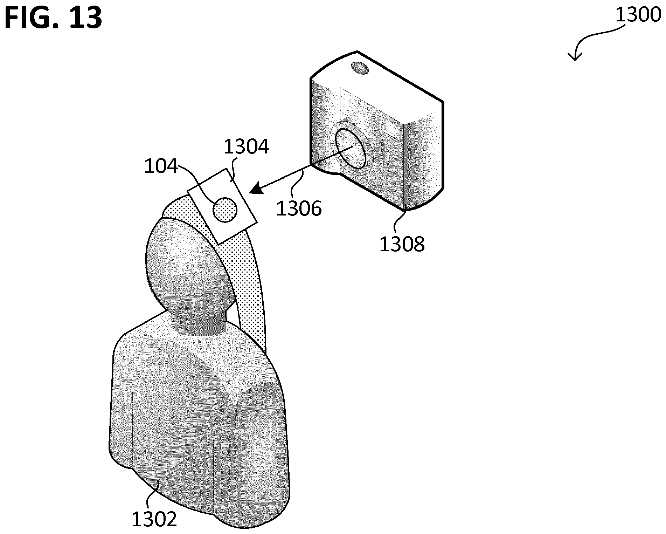

**Fig.13** veranschaulicht ein Verfahren 1300 zum Durchführen einer optischen Farberkennung z.B. gemäß Verfahren 800 und/oder gemäß Verfahren 900.

Gemäß verschiedenen Ausführungsformen kann eine Farbtafelvorrichtung 1304 (z.B. eine der hierin beschriebenen Farbtafelvorrichtungen) an einem Haarbüschel einer Person 1302 befestigt werden. Die Farbtafelvorrichtung 1304 kann selbsttragend befestigt sein oder werden. Ferner können Bilddaten der an dem Haarbüschel befestigten Farbtafelvorrichtung 1304 erfasst 1306 werden. Das Erfassen 1306 der Bilddaten kann mittels eines (z.B. mobilen) Farberkennung-Geräts 1308 erfolgen, welches eine Bilderfassungsvorrichtung (z.B. eine Kamera) aufweist.

Anschaulich ermöglicht die Farbtafelvorrichtung 1304, dass das Fotografieren der Haare bzw. die Nutzung der Kamera (z.B. einem Mobiltelefon mit einer entsprechenden Anwendung) mit beiden Händen erfolgen.

Die Farbtafelvorrichtung 1304 kann mit ihrer zweiten Seite 100u zu dem Haarbüschel hin ausgerichtet sein. Die Farbtafelvorrichtung 1304 kann mit ihrer ersten Seite 100o zu dem Farberkennung-Gerät 1308 hin ausgerichtet sein. Das Erfassen der Bilddaten kann mittels des Erkennungsbereichs 104 erfolgen. Beispielsweise kann das Haarbüschel durch den Erkennungsbereich 104 hindurch sichtbar sein und/oder z.B. teilweise durch den Erkennungsbereich hindurch erstreckt sein.

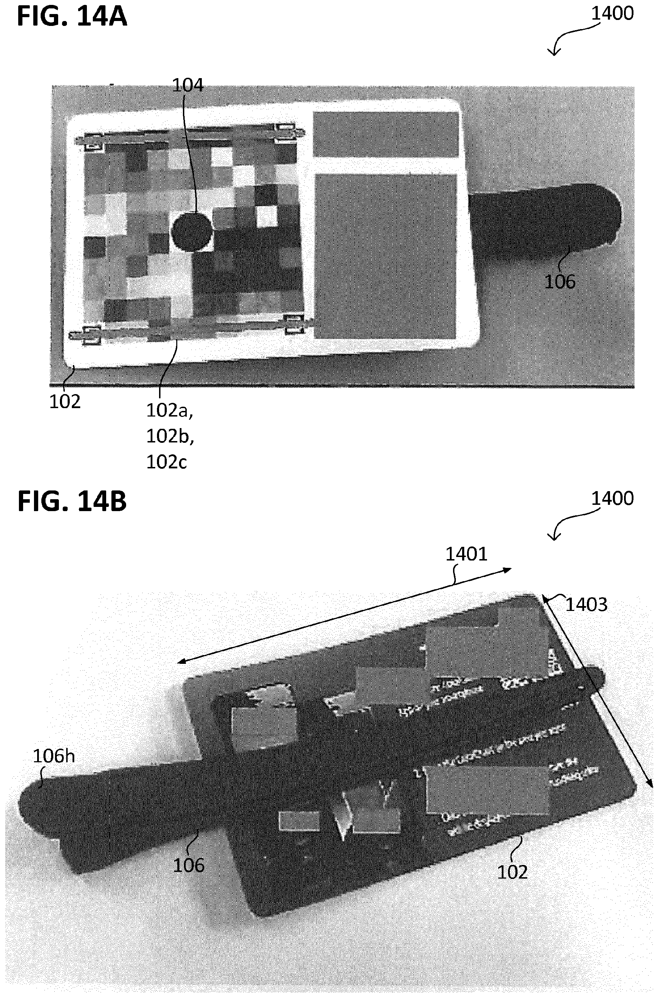

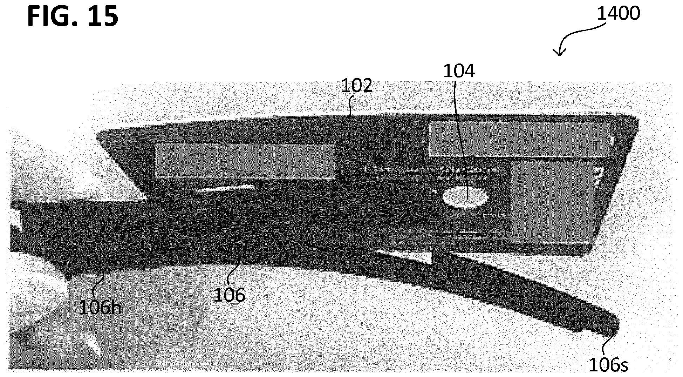

**Fig.14A** veranschaulicht eine Farbtafelvorrichtung 1400 in einer schematischen Perspektivansicht (z.B. auf eine erste Seite 100o der Farbtafelvorrichtung 1400), **Fig.14B** die Farbtafelvorrichtung 1400 in einer schematischen Perspektivansicht (z.B. auf eine zweite Seite 100u der Farbtafelvorrichtung 1400) und **Fig.15** die Farbtafelvorrichtung 1500 in einer schematischen Perspektivansicht (z.B. auf eine zweite Seite 100u der Farbtafelvorrichtung 1500).

Die Farbtafel 102 kann eine Vielzahl von Referenzfarben 102a, 102b, 102c aufweisen. Die Referenzfarben 102a, 102b, 102c können in einer Matrix angeordnet sein. Anschaulich kann die Matrix eine Vielzahl von Farbfeldern aufweisen, von denen jedes eine Referenzfarbe 102a, 102b, 102c aufweist. Alternativ oder zusätzlich kann die Farbtafel 102 zumindest einen Farbton in einer oder mehreren Hellwertabstufungen aufweisen. Mit anderen Worten können sich die, z.B. zumindest zwei, Referenzfarben 102a, 102b, 102c in ihrem Hellwert (z.B. farbmetrische Helligkeit) unterscheiden. Alternativ oder zusätzlich können sich die, z.B. zumindest zwei, Referenzfarben 102a, 102b, 102c in ihrem Farbton und/oder ihrer Sättigung unterscheiden.

Jede Referenzfarbe 102a, 102b, 102c kann von einem Grundfarbton definiert sein oder werden. Beispielsweise kann die Farbtafel 102 einen oder mehrere Naturfarbtöne (z.B. braun, olivgrün, beige, weiß) als Referenzfarben 102a, 102b, 102c aufweisen. Die Naturfarbtöne können auch mit anderen Namen bezeichnet sein oder werden, z.B. Curry, Honig, Karamell, Sand, Milchkaffee, Mais, Schoko, Kakao, Tabak, Cognac, Kupfer, Messing, Kastanie, Senf, Camel.

Die Farbtafel 102 (z.B. die Matrix) kann mehr als oder gleich zu 3 Referenzfarben 102a, 102b, 102c (z.B. Referenzfarb-Felder) aufweisen, z.B. mehr als oder gleich zu 5, z.B. mehr als oder gleich zu 10, z.B. mehr als 15, z.B. mehr als oder gleich zu 25, z.B. mehr als oder gleich zu 50, z.B. mehr als oder gleich zu 100.

Die Farbtafel 102 Kann eine erste Ausdehnung 1401 aufweisen in einem Bereich von ungefähr 2 Zentimeter (cm) bis ungefähr 20 cm, z.B. in einem Bereich von ungefähr 5 cm bis ungefähr 10 cm, z.B. ungefähr 8,5 cm. Gemäß verschiedenen Ausführungsformen kann die Farbtafel 102 eine zur ersten Ausdehnung 1401 senkrechte zweite Ausdehnung 1403 aufweisen in einem Bereich von ungefähr 2 Zentimeter (cm) bis ungefähr 20 cm, z.B. in einem Bereich von ungefähr 3 cm bis ungefähr 10 cm, z.B. ungefähr 5,5 cm.

Die Haarklammervorrichtung 106 kann in der Geschlossen-Position den Erkennungsbereich 104 zumindest teilweise (teilweise oder vollständig) abdecken. Beispielsweise kann die Haarklammervorrichtung 106 (oder deren Schenkel 106s) einen verbreiterten Endabschnitt (anschaulich paddelförmig) aufweisen, welcher den Erkennungsbereich 104 in der Geschlossen-Position vollständig abdeckt.

Der Erkennungsbereich 104 kann einen vieleckigen Querschnitt aufweisen (z.B. quadratisch). Alternativ kann der Erkennungsbereich 104 einen runden Querschnitt aufweisen.

Die Farbtafel 102 kann gekrümmt sein oder werden. Somit kann diese beispielsweise an eine Kopfform der Person 1308 angepasst sein oder werden.

Die Farbtafel 102 kann ein Polymer aufweisen oder daraus gebildet sein. Ein Polymer kann zumindest eines von Folgenden aufweisen oder daraus gebildet sein: Kautschuk (z.B. synthetischer Kautschuk und/oder natürlicher Kautschuk), ein Phenoplast (z.B. mittels Phenolharz gebildet), Neopren, Nylon, Polyvinylchlorid (PVC), Polystyrol, Polyethylen, Polypropylen, Polyacrylnitril, Polyethylenterephthalat (PET), Polyvinylbutyral, Silikon, usw. Alternativ oder zusätzlich kann die Farbtafel 102 einen Zellstoff aufweisen oder daraus gebildet sein, z.B. Pappe. Optional kann die Farbtafel 102 beschichtet sein oder werden.

## Patentansprüche

1. Farbtafelvorrichtung (100, 300, 500), aufweisend:
• eine Farbtafel (102), welche eine Vielzahl voneinander verschiedener Referenzfarben (102a, 102b, 102c) aufweist, wobei die Farbtafel (102) einen transparenten oder transluzenten Erkennungsbereich (104) aufweist, mittels dessen eine Farbe eines Haarbüschels erfassbar ist; und
• eine an die Farbtafel (102) angeformte Haarklammervorrichtung (106), welche zum Klemmen eines in seiner Haarfarbe zu erfassenden Haarbüschels in dem Erkennungsbereich eingerichtet is **dadurch gekennzeichnet, dass**
• die Farbtafel (102) einen flächenförmigen Träger (502a) aufweist und die Haarklammervorrichtung (106) Teil des flächenformigen Trägers (502) ist und wobei die Farbtafel (102) einen Faltbereich (302) aufweist, in dem die Farbtafel (102) faltbar so eingerichtet ist, dass in der Geöffnet-Position ein Spalt (106d) gebildet wird, der zum Aufnehmen eines Haarbüschels eingerichtet ist.

2. Farbtafelvorrichtung (100, 300, 500) gemäß Anspruch 1,
wobei der Erkennungsbereich (104) eine Durchgangsöffnung und/oder einen transparentes oder transluzentes Material aufweist.

3. Farbtafelvorrichtung (100, 300, 500) gemäß Anspruch 1 oder 2,
wobei die Haarklammervorrichtung (106) in einer Geschlossen-Position gegen die Farbtafel (102) presst.

4. Farbtafelvorrichtung (100, 300, 500) gemäß Anspruch 3,
wobei eine Kraft, welche die Haarklammervorrichtung (106) erzeugt, größer ist als eine Gewichtskraft der Farbtafelvorrichtung (100, 300, 500), so dass sich die Farbtafelvorrichtung (100, 300, 500) an dem zu erkennenden Haarbüschel selbst trägt.

5. Farbtafelvorrichtung (100, 300, 500) gemäß einem der Ansprüche 1 bis 4,
wobei die Farbtafel (102) zumindest eine optische Lageerkennungsmarke zum Lageerkennen der Farbtafel (102) aufweist.

6. Verfahren (900) zur Farberkennung mittels einer Farbtafelvorrichtung (100, 300, 500) gemäß Anspruch 1, mit den Schritten:
• Klemmen (901) eines zu erkennenden Haarbüschels mittels der Haarklammervorrichtung (106);
• Durchführen (903) einer optischen Farberkennung des Haarbüschels unter Verwendung der Farbtafelvorrichtung (100, 300, 500).

7. Verfahren (900) gemäß Anspruch 6,
wobei das Klemmen (901) beinhaltet, das zu erfassende Haarbüschel gegen die Farbtafel (102) zu pressen.

8. Verfahren (900) gemäß Anspruch 6 oder 7,
wobei das Klemmen (901) derart erfolgt, dass sich die Farbtafelvorrichtung (100, 300, 500) an dem zu erkennenden Haarbüschel entgegen ihrer Gewichtskraft selbst trägt.

9. Verfahren (900) gemäß einem der Ansprüche 6 bis 8,
wobei das Durchführen (903) der optischen Farberkennung beinhaltet, Bilddaten der Farbtafel (102) und des Haarbüschels zu erfassen, auf deren Grundlage die optische Farberkennung erfolgt.

10. Verfahren (900) gemäß einem der Ansprüche 6 bis 9, ferner aufweisend:
Ermitteln eines Färbemittels auf Grundlage der Farberkennung, welches durch Aufbringen auf das Haarbüschel eine Farbänderung gemäß einer Vorgabe bewirkt.

11. Verfahren (900) gemäß einem der Ansprüche 6 bis 10,
wobei das Durchführen der Farberkennung mittels eines Mobilgeräts erfolgt.

## Claims

1. A color chart device (100, 300, 500), comprising:
• a color chart (102) which comprises a plurality of reference colors (102a, 102b, 102c) which are different from one another, wherein the color chart (102) comprises a transparent or translucent detection region (104), by means of which a color of a hair tuft can be detected; and
• a hair clip device (106) formed on the color chart (102), which is designed to clamp a hair tuft, the hair color of which is to be detected in the detection region, **characterized in that**
• the color chart (102) comprises a planar support (502a) and the hair clip device (106) is part of the planar support (502) and, wherein the color chart (102) comprises a folding region (302) in which the color chart (102) is designed to be foldable, such that, in the open position, a gap (106d) is formed which is designed to receive a hair tuft.

2. The color chart device (100, 300, 500) according to claim 1,
wherein the detection region (104) comprises a through-opening and/or a transparent or translucent material.

3. The color chart device (100, 300, 500) according to claim 1 or 2,
wherein the hair clip device (106) presses against the color chart (102) in a closed position.

4. The color chart device (100, 300, 500) according to claim 3,
wherein a force generated by the hair clip device (106) is greater than a weight force of the color chart device (100, 300, 500), so that the color chart device (100, 300, 500) supports itself on the hair tuft to be detected.

5. The color chart device (100, 300, 500) according to one of claims 1 to 4,
wherein the color chart (102) comprises at least one optical position detection mark for detecting the position of the color chart (102).

6. A method (900) for color detection by means of a color chart device (100, 300, 500) according to claim 1, comprising the steps of:
• clamping (901) a hair tuft to be detected by means of the hair clip device (106);
• performing (903) an optical color detection of the hair tuft using the color chart device (100, 300, 500).

7. The method (900) according to claim 6,
wherein the clamping (901) includes pressing the hair tuft to be detected against the color chart (102).

8. The method (900) according to claim 6 or 7,
wherein the clamping (901) is carried out such that the color chart device (100, 300, 500) supports itself on the hair tuft to be detected, counter to its own weight force.

9. The method (900) according to one of claims 6 to 8,
wherein performing (903) the optical color detection includes capturing image data of the color chart (102) and the hair tuft, on the basis of which the optical color detection is carried out.

10. The method (900) according to one of claims 6 to 9, further comprising:
determining a dye based on the color detection which, when applied to the hair tuft, causes a color change according to a specification.

11. The method (900) according to one of claims 6 to 10,
wherein the color detection is carried out by means of a mobile device.

## Revendications

1. Dispositif à nuancier (100, 300, 500), présentant :
• un nuancier (102) qui présente une pluralité de couleurs de référence (102a, 102b, 102c) différentes les unes des autres, dans lequel le nuancier (102) présente une zone de reconnaissance (104) transparente ou translucide au moyen de laquelle une couleur d'une touffe de cheveux peut être détectée ; et
• un dispositif de serrage de cheveux (106) formé sur le nuancier (102) et conçu pour serrer une touffe de cheveux dont la couleur de cheveux doit être détectée dans la zone de reconnaissance, **caractérisé en ce que**
• le nuancier (102) présente un support plan (502a) et le dispositif de serrage de cheveux (106) fait partie du support plan (502), et dans lequel le nuancier (102) présente une zone de pliage (302) dans laquelle le nuancier (102) est conçu de manière à pouvoir être plié de sorte que, dans la position ouverte, un espace (106d) est formé, lequel est conçu pour recevoir une touffe de cheveux.

2. Dispositif à nuancier (100, 300, 500) selon la revendication 1,
dans lequel la zone de reconnaissance (104) présente une ouverture de passage et/ou un matériau transparent ou translucide.

3. Dispositif à nuancier (100, 300, 500) selon la revendication 1 ou 2,
dans lequel le dispositif de serrage de cheveux (106) appuie contre le nuancier (102) dans une position fermée.

4. Dispositif à nuancier (100, 300, 500) selon la revendication 3,
dans lequel une force générée par le dispositif de serrage de cheveux (106) est supérieure à un poids du dispositif à nuancier (100, 300, 500), de sorte que le dispositif à nuancier (100, 300, 500) se supporte lui-même sur la touffe de cheveux à reconnaître.

5. Dispositif à nuancier (100, 300, 500) selon l'une des revendications 1 à 4,
dans lequel le nuancier (102) présente au moins un repère de reconnaissance de position optique permettant de reconnaître la position du nuancier (102).

6. Procédé (900) pour la reconnaissance de couleur au moyen d'un dispositif à nuancier (100, 300, 500) selon la revendication 1, comportant les étapes consistant à :
• serrer (901) une touffe de cheveux à reconnaître au moyen du dispositif de serrage de cheveux (106) ;
• exécuter (903) une reconnaissance de couleur optique de la touffe de cheveux à l'aide du dispositif à nuancier (100, 300, 500).

7. Procédé (900) selon la revendication 6,
dans lequel le serrage (901) comprend le fait de presser la touffe de cheveux à détecter contre le nuancier (102).

8. Procédé (900) selon la revendication 6 ou 7,
dans lequel le serrage (901) est effectué de telle sorte que le dispositif à nuancier (100, 300, 500) se supporte lui-même sur la touffe de cheveux à reconnaître, à l'encontre de son poids.

9. Procédé (900) selon l'une des revendications 6 à 8,
dans lequel l'exécution (903) de la reconnaissance de couleur optique comprend la détection de données d'image du nuancier (102) et de la touffe de cheveux, sur la base desquelles la reconnaissance de couleur optique est effectuée.

10. Procédé (900) selon l'une des revendications 6 à 9, présentant en outre :
la détermination, sur la base de la reconnaissance de couleur, d'un agent de coloration qui, lorsqu'il est appliqué sur la touffe de cheveux, provoque un changement de couleur selon une spécification.

11. Procédé (900) selon l'une des revendications 6 à 10,
dans lequel l'exécution de la reconnaissance de couleur est effectuée au moyen d'un appareil mobile.
